# EUROPÄISCHE PATENTSCHRIFT

(11) **EP 3 300 557 B1**
(45) Veröffentlichungstag und Bekanntmachung des Hinweises auf die Patenterteilung: **01.07.2020**
(21) Anmeldenummer: 17191791.7
(22) Anmeldetag: 19.09.2017
(51) Int. Cl.: A01B 63/111, A01B 63/112

(54) **VORRICHTUNG UND VERFAHREN ZUR REGELUNG DES BETRIEBS EINES HYDRAULISCH BETÄTIGBAREN ANBAUGERÄTS AN EINEM FAHRZEUG**
DEVICE AND METHOD FOR CONTROLLING THE OPERATION OF A HYDRAULICALLY ACTUATED TOWING DEVICE ON A VEHICLE
DISPOSITIF ET PROCÉDÉ DE CONTROLE DU FONCTIONNEMENT D'UN APPAREIL ISOLÉ HYDRAULIQUE D'UN VÉHICULE

(30) Priorität: 29.09.2016 DE 102016218825
(43) Veröffentlichungstag der Anmeldung: 04.04.2018
(73) Patentinhaber: Robert Bosch GmbH, 70442 Stuttgart (DE)
(72) Erfinder: Schleyer, Markus, 71640 Ludwigsburg (DE); Rose, Steffen, 71638 Ludwigsburg (DE); Michalke, Gabriele, 71263 Weil Der Stadt (DE)

(56) Entgegenhaltungen:
- EP-A2- 0 112 642
- WO-A1-2013/169188
- CN-A- 104 782 259
- DE-A1- 4 222 108
- DE-A1-102009 022 410

## Beschreibung

Die vorliegende Erfindung betrifft eine Vorrichtung für ein Fahrzeug, insbesondere einen Traktor mit einer hydraulischen Betätigungseinheit zur Regelung des Betriebs eines Anbaugeräts an dem Fahrzeug, sowie ein hierfür geeignetes Betriebsverfahren. Insbesondere findet die Erfindung Anwendung bei einem Traktor, einem landwirtschaftlichen Ackerschlepper, einer mobilen Arbeitsmaschine zur Feldbearbeitung oder dergleichen. Ackerschlepper bzw. Traktoren werden als universell einsetzbare Arbeitsmaschinen vorrangig in der Landwirtschaft zur Bearbeitung von Böden eingesetzt.

Das Pflügen als eine der häufigsten Anwendungen stellt hierbei hohe Anforderungen an den Antriebsstrang und die Regelgüte der elektrohydraulischen Hubwerksregelung (EHR). Vor allem bei stark inhomogenen oder sehr feuchten Böden besteht häufig aufgrund einer sehr hohen Widerstandskraft am Pflug die Möglichkeit, dass der Traktor steckenbleiben oder der Verbrennungsmotor abgewürgt werden kann. Zusätzlich zu einer Lagerregelung des Pflugs versucht die Zugkraftregelung ein Abwürgen des Motors zu verhindern, indem die Zugkraft am traktorseitigen Gelenk des Unterlenkers gemessen und diese auf einen vom Bediener vorgegebenen Wert geregelt wird, welcher ein Abwürgen des Motors verhindert bzw. eine Reduzierung des Schlupfs der Antriebsräder bewirkt. Dies geschieht hauptsächlich durch ein Anheben des Pflugs und der daraus resultierenden Verringerung der Widerstandskraft des Pflugs. Aufgrund der Tatsache, dass die Kraft auf die Pflugschar unter anderem von der Eindringtiefe bzw. von der Pflugtiefe abhängt, kann die von einem Pflug erzeugte Kraft in erster Näherung auch als Indikator für die sich einstellende Pflugtiefe herangezogen werden.

Zudem verbessert sich während des Betriebs in Zugkraftregelung bei sehr inhomogenen Böden das Resultat des Bearbeitungsprozesses, da der Pflug in sehr dichtem Bodenbereich seine Pflugtiefe verringern würde. Bei sehr welligen und unebenen Böden verbessert sich ebenso das Pflugbild und der Komfort wird erhöht, da sich die Pflugtiefe über die variierende Zugkraft dem Bodenprofil besser anpasst, als wenn rein auf Lage bzw. Tiefe des Pflugs geregelt würde. Nach dem Stand der Technik resultiert die Änderung der Lage des Pflugs jedoch alleinig aus der Variation der Höhe des Anbaugeräts während des Pflügens.

Ein gleichmäßiges Pflugbild, bei dem sich die Neigung des Pflugs annähernd nach der Topologie der Ebene des zu bearbeitenden Bodens einstellt, kann mit dieser Anordnung nicht erreicht werden. Zudem werden für die EHR nach dem Stand der Technik zwei kostenintensive Kraftmessbolzen benötigt, welche einen erheblichen Anteil der Gesamtkosten eines EHR-Systems ausmachen.

Aus der DE 42 22 108 A1 ist eine Zugkraftregelung an einem landwirtschaftlichen Fahrzeug mit einem an dem Fahrzeug angebauten Pflug bekannt, welcher zumindest an einem Rahmen angeordnete Pflugkörper aufweist. Es ist zumindest ein Sensor zur Erfassung der auf die Pflugkörper wirkenden Kräfte vorgesehen, wobei in Abhängigkeit der erfassten Kraft die Zugkraftregelung erfolgt. Die Pflugkörper sind derart um eine senkrechte Achse drehbar an dem Rahmen angeordnet, dass diese von einem Hydraulikzylinder zur Einstellung des Anlagedrucks in horizontaler Richtung verstellt werden können. Eine Einstellung der Eindringtiefe der Pflugscharen in den Boden ist hierdurch nicht möglich.

Im Zusammenhang mit der Zugkraftregelung an einer landwirtschaftlichen Maschine mit hakenförmigen Bearbeitungselementen ist es aus der WO 2013/169 188 A1 bekannt, dass bei einer Kurvenfahrt der Maschine seitliche Kräfte auf die Bearbeitungselemente einwirken, die den Eingriff der Bearbeitungselemente in den Boden zusätzlich belasten. Die seitlichen Kräfte werden von Kraftmesssensoren an den Bearbeitungselementen und der Winkel zwischen der Fahrtrichtung der Maschine und einer Zugmaschine wird durch einen Winkelsensor erfasst. Zur Erzeugung eines Einstellungssignals für den Eingriff der Bearbeitungselemente in den Boden werden in einem Steuergerät die Signale der Kraftmesssensoren - unter Berücksichtigung der jeweiligen Signale des Winkelsensors - mit maximalen Schwellwerten für Seitenkräfte verglichen. Dieses Konzept ist allein auf den Bezug der Fahrtrichtung der Maschine zu den seitlichen Kräften eingerichtet, bewirkt insoweit nur eine Reaktion auf die abgewinkelte Relativbewegung der Maschine zu eine Geradeausfahrt und ermöglicht dadurch nur eine Anpassung des Eingriffs an die auf die Bearbeitungselemente einwirkenden zusätzlichen Seitenkräfte bei einer Kurvenfahrt.

Nach der DE 10 2009 022 410 A1 sind eine Anordnung zur Hubregelung eines Hubwerkzeugs eines Fahrzeugs und ein Verfahren zur Hubregelung bekannt. Ein Anbaugerät kann ein Pflug an einem Traktor sein, wobei der Pflug durch Veränderung des Lagesollwertes abgesenkt wird, bis die gewünschte Arbeitstiefe erreicht ist. Die DE 0 112 642 A2 beschreibt einen landwirtschaftlichen Traktor mit einem hydraulischen Hubwerk, an dessen Unterlenker ein Sensor für eine Arbeitstiefe angeordnet ist. Aus der CN 104 782 259 A ist ein Traktor mit einem hydraulischen Hubwerk bekannt.

Auch wenn die geschilderten Ansätze für den Betrieb solcher Traktoren bzw. Ackerschlepper bereits gute Ergebnisse liefern, so sind die verfügbaren Systeme gleichwohl teilweise zu komplex und damit zu kostenintensiv, nicht ausreichend verlässlich und/oder zu ungenau. Insoweit besteht insbesondere bei der Ermittlung der Lage des Anbaugeräts Bedarf an Verbesserungen.

Hiervon ausgehend ist es Aufgabe der vorliegenden Erfindung, eine Vorrichtung und ein Verfahren zu schaffen, die die genannten Nachteile lindern oder sogar vermeiden. Insbesondere soll auf konstruktiv einfache und für die Umgebungsbedingungen im Feld geeignete Art die Ermittlung der Lage des Anbaugeräts verbessert werden. Außerdem soll das Verfahren automatisch eine korrekte Einstellung des Anbaugeräts ermöglichen.

Diese Aufgaben werden gelöst mit einer Vorrichtung und einem Verfahren gemäß den unabhängig formulierten Patentansprüchen. Weitere Ausgestaltungen der Erfindung sind in den abhängig formulierten Patentansprüchen angegeben. Es ist darauf hinzuweisen, dass die Beschreibung, insbesondere im Zusammenhang mit den Figuren, weitere Einzelheiten und Weiterbildungen der Erfindung ausführen, die mit den Merkmalen aus den Patentansprüchen kombinierbar sind.

Hierzu trägt eine Vorrichtung an einem Fahrzeug mit einer hydraulischen Betätigungseinheit zur Regelung des Betriebs eines Anbaugeräts an dem Fahrzeug bei, wobei das Anbaugerät mindestens eine Pflugschar aufweist, umfassend zumindest eine Lageerfassungseinheit mit mindestens einem Lageerfassungssensor, eine Auswerteeinheit und eine datenleitende Verbindung hin zu einem der hydraulischen Betätigungseinheit zugeordneten Steuergerät, wobei der mindestens einen Pflugschar mindestens ein Kraftmesssensor so zugeordnet ist, dass mindestens eine angreifende Kraft an der mindestens einen Pflugschar direkt ermittelbar ist.

Dabei handelt es sich bei dem Fahrzeug insbesondere um einen Traktor bzw. einen sogenannten Ackerschlepper. Als Anbaugerät wird insbesondere ein Pflug oder ein ähnliches Bodenbearbeitungsgerät angesehen. Zur Bestimmung der Lage, insbesondere der Höhenlage des Anbaugeräts über Boden, ist eine Lageerfassungseinheit vorgesehen, die mindestens einen Kraftmesssensor umfasst. Eine zugehörige Auswerteeinheit ist mit dem mindestens einen Kraftmesssensor elektrisch und datenleitend verbunden und eingerichtet, dessen Messsignale zu verarbeiten. Die Auswerteeinheit ist eingerichtet, eine Analyse der Daten des Lageerfassungssensors vorzunehmen, sodass die Pflugscharen eindeutig bezüglich ihrer Lage/Position erfasst bzw. bestimmt werden können.

Die in der Auswerteeinheit bestimmte Lage kann mit vorgegebenen (zum Beispiel gespeicherten und/oder von dem Bediener des Fahrzeugs eingestellten) Parametern abgeglichen oder beeinflusst werden, wobei dann auch ein Regelungssignal an das Steuergerät übermittelt wird und dabei der Betrieb der hydraulischen Betätigungseinheit des Anbaugeräts beeinflusst werden kann. Die Auswerteeinheit kann ein separates (elektronisches) Aggregat sein, es ist aber auch möglich, dass die Auswerteeinheit Teil des Steuergeräts zur Ansteuerung der hydraulischen Betätigungseinheit selbst ist. Die (mindestens) eine datenleitende Verbindung zwischen Auswerteeinheit und Steuergerät kann kabelgebunden oder kabellos realisiert sein. Das Steuergerät und/oder die Auswerteeinheit können einer Fahrzeugsteuerung zugeordnet oder unabhängig davon eingerichtet sein.

Ein Vorteil besteht darin, dass die bekannte Geometrie bzw. die Abmessungen eines bestimmten Pflugs in der Auswerteeinheit, dem Steuergerät oder der Fahrzeugsteuerung gespeichert und für die Auswertung so einfach bereitgestellt werden kann. Damit kann ggf. die Genauigkeit der Auswertung mit Bezug auf konkret hinterlegte Gestaltungen des Anbaugeräts verbessert werden.

Die Erfindung zielt darauf ab, die beim Pflügen relevanten Prozessgrößen, das heißt die Tiefe der einzelnen (insbesondere unterhalb des Trägers befindlichen) Pflugscharen, direkt zu bestimmen, anstatt Zwischengrößen heranzuziehen, die zwar gute Indikatoren darstellen, aber nur indirekt die Prozessgrößen abbilden. Dies erfolgt über den Pflugscharen zugeordnete Kraftmesssensoren. Einzelne, den Pflugscharen nicht zuordenbare Zugkraftsensoren können gegebenenfalls entfallen.

Der vorgeschlagenen Vorrichtung liegt der Gedanke einer Bestimmung der Tiefen (gegenüber der Bodenoberfläche) der einzelnen Pflugscharen und auch insbesondere unterhalb des Trägers befindlichen Pflugscharen zugrunde. Dadurch kann die Position des Pflugs zur Bodenoberfläche direkt bestimmt werden und die Sicherstellung eines gleichmäßigen Pflugbilds deutlich vereinfacht werden. Außerdem kann bei Vorhandensein der nötigen Stellglieder automatisch eine korrekte Einstellung des Pflugs erfolgen, was ansonsten Aufgabe des Fahrers ist.

Bei der Erfindung können die Pflugtiefe und die Ausrichtung des Pflugs (Winkel über dem Boden) aus einer Direktdetektion der Pflugscharen ermittelt werden.

Ein besonderer Vorteil der vorgeschlagenen Maßnahmen ist die direkte Bestimmung der für den Prozess Pflügen relevanten Größen (Tiefe der einzelnen Pflugscharen). Die bekannte gemessene Zugkraft kann nur einen Durchschnittswert aller (insbesondere unterhalb des Trägers befindlichen) Pflugscharen abbilden. Fehler durch Verkippung sind hierbei möglich, ohne detektiert werden zu können. Ein weiterer Vorteil der vorgeschlagenen Vorrichtung besteht in der Ermöglichung der Nutzung weiterer Freiheitsgrade bei der Verstellung des Pflugs: Die Nachteile der bekannten Vorrichtung werden vermieden, bei der nur die Höhe des Pflugs verstellt wird, nicht aber die Neigung/Verkippung des Pflugs in Längs- oder Querrichtung. Da hierbei zudem keine Information vorliegt, in welchem Winkel der Pflug zur Bodenoberfläche steht, ist die Neigung über einen Aktor dynamisch nicht einzustellen. Der Fahrer kann die Längsneigung lediglich über die Länge des Oberlenkers einstellen, die Querneigung über eine Einstellschraube. Er wird es in der Regel so tun, dass sich eine gleichmäßige Tiefe bei ebener Bodenfläche ergibt. Bei sich ändernder Bodentopologie oder falscher Einstellung ist ein partielles Eintauchen bzw. Ausheben des Pflugs und damit ein ungleichmäßiges Pflugbild nicht zu vermeiden. Durch die automatische Einstellung aller Pflugfreiheitsgrade wird im Gegensatz zu der bekannten Vorrichtung dem Fahrer der oft langwierige Einstellprozess vor dem Pflügen abgenommen. Außerdem können Fehleinstellungen, die in einem ungleichmäßigen Pflugbild resultieren, vermieden werden. Ein weiterer Vorteil besteht im Kosteneinsparpotential durch Entfallen der Zugkraftsensoren.

Zweckmäßig ist jeweils mindestens ein Kraftmesssensor zumindest an der ersten Pflugschar und an der letzten Pflugschar verbaut. Mit Vorteil ist der Kraftmesssensor ein Biegespannungsmesssensor. Vorzugsweise ist der Kraftmesssensor ein Scherkraftmesssensor. Bevorzugt ist der Biegespannungsmesssensor am Steg oder Fuß der mindestens einen Pflugschar angeordnet. Zweckmäßig ist der Scherkraftmesssensor in einem Anschraubpunkt zwischen Pflugschar und Halter angeordnet. Mit Vorteil wird die hydraulische Betätigungseinheit zur Ansteuerung eines Oberlenkerzylinders und eines Hubwerkszylinders (Unterlenkerzylinder) herangezogen. Als Kraftsensoren können hier beispielsweise Dehnungsmesstreifen verwendet werden, die auf Abschnitten des Anbaugeräts angeordnet sind. Diese Dehnungsmessstreifen können die Verformung des Anbaugeräts in Folge von einwirkenden Kräften erfassen. Aus der Verformung können wiederum die jeweils wirkenden Kräfte berechnet werden. Dehnungsmessstreifen als Kraftsensoren können auf dem Anbaugerät und insbesondere auf den Pflugscharen beispielsweise aufgeklebt sein. Die Dehnungsmesstreifen messen eine Dehnung bevorzugt über eine Veränderung des elektrischen Widerstandes.

Die hydraulische Betätigungseinheit umfasst bevorzugt ein Hubwerk mit einem Hubwerkszylinder für das Anbaugerät, das von der Auswerteeinrichtung aktivierbar ist. Hierfür sind insbesondere elektrische oder datenleitende Verbindungen vorgesehen. Insbesondere sind die Auswerteeinheit und das Hubwerk so eingerichtet, dass die Auswerteeinheit mindestens eine Zustandsgröße einstellen und/oder auf ein Stellorgan des Hubwerks zugreifen kann. Hierbei ist das Anbaugerät über einen Unterlenker und einen hydraulisch verstellbaren Oberlenkerzylinder mit dem Fahrzeug verbunden. Da der Unterlenker durch den hydraulisch verstellbaren Unterlenkerzylinder in seiner Höhe verstellt werden kann, ist es möglich, das Anbaugerät in dieser Konstellation sowohl in seiner Höhe als auch in seiner Neigung um eine Querachse zu verstellen. Mit Vorteil ist am Anschluß des Unterlenkerzylinders oder im Unterlenkerzylinder ein Drucksensor angeordnet.

Bevorzugt steht der Kraftmesssensor mit der Auswerteeinheit in Verbindung, wobei ein Vergleichselement für einen Vergleich der ermittelten Kraft an einer in den Boden eingedrungenen Pflugschar mit einer mittleren Kraft aller Pflugscharen vorhanden ist.

Weitere Details der Vorrichtung ergeben sich auch aus der nachfolgenden Erläuterung zu dem Betriebsverfahren. Insbesondere können die Erläuterungen zu den Verfahren hier ergänzend herangezogen werden. Ebenso gilt, dass die vorstehenden Erläuterungen zur Vorrichtung die Beschreibung der Verfahren ergänzen können.

Weiter wird hier ein Verfahren zum Betrieb eines Fahrzeugs, insbesondere eines Traktors, mit einer hydraulischen Betätigungseinheit zur Regelung des Betriebs eines Anbaugeräts an dem Fahrzeug vorgeschlagen. Das Verfahren kann insbesondere mit der hier ebenfalls vorgeschlagenen Vorrichtung durchgeführt werden, wobei die Auswerteeinheit dazu eingerichtet ist, das Verfahren durchzuführen.

Das Verfahren umfasst zumindest die folgenden Schritte:
a) Ermitteln mindestens einer an der mindestens einen Pflugschar angreifenden Kraft mittels mindestens eines Kraftmesssensors;
b) Vergleich der ermittelten Kraft mit einer vorgegebenen mittleren Kraft aller Pflugscharen;
c) Aktivieren der hydraulischen Betätigungseinheit, wenn die ermittelte Kraft von der mittleren Kraft aller Pflugscharen abweicht.

Die Schritte a) bis c) werden bevorzugt in der angegebenen Reihenfolge durchgeführt, wobei gleichwohl die Schritte zumindest teilweise zeitlich überlagert und/oder separat wiederholt werden können. So kann es beispielsweise auftreten, dass die Schritte a) und b) häufiger wiederholt werden, bevor Schritt c) durchgeführt wird, nämlich insbesondere erst dann, wenn die Bedingung in Schritt c) erfüllt ist.

Ausgehend von diesen seitens des Kraftmesssensors erzeugten Daten kann gemäß Schritt a) eine Kraft ermittelt werden, die direkt für die Bestimmung einer Höhenlage der Pflugschar bzw. des Anbaugeräts genutzt werden kann. Die relative "Höhenlage" betrifft in diesem Zusammenhang bevorzugt eine Kenngröße, die beispielsweise eine Aussage zur Eindringtiefe der Pflugschar des Anbaugeräts in den Boden repräsentiert.

Die so ermittelte Höhenlage kann insbesondere in der Auswerteeinheit mit einer vorgegebenen und/oder aktuellen erwarteten Referenzkraft verglichen werden (b)). Die Referenzkraft kann im Fahrzeug errechnet werden, hinterlegt und/oder gespeichert sein und der Auswerteeinheit zur Verfügung gestellt werden. Die (aktuelle) Referenzkraft wird insbesondere in Abhängigkeit mindestens eines (aktuellen) Betriebsparameters des Fahrzeugs (zum Beispiel Geschwindigkeit, Motorlast, etc.) und/oder der hydraulischen Betätigungseinheit (zum Beispiel Hubwerkseinstellung, etc.) vorbestimmt oder ausgewählt. Insoweit wird insbesondere geprüft, ob eine gewünschte bzw. erwartete Referenzlage relativ zum Boden tatsächlich aktuell vorliegt. Die Referenzkraft kann gegebenenfalls auch als Mittelwert der in Schritt a) ermittelten Kräfte bestimmt werden.

Gemäß Schritt c) wird dann, wenn die ermittelte Referenzkraft von der aktuellen relevanten bzw. erwarteten Referenzkraft abweicht, die hydraulische Betätigungseinheit aktiviert, um eine Anpassung der aktuellen Lage der mindestens einen Pflugschar und/oder des Anbaugeräts hin zur gewünschten Lage vorzunehmen, beispielsweise insbesondere die Höhenlage des Anbaugeräts über dem Boden anzuheben oder abzusenken. Ggf. kann dieser Betätigungsvorgang auch mit den in den Schritten a) bis b) genannten Schritten überwacht und geregelt werden. Es ist aber auch möglich, dass eine separate Vorgabe aus dem Vergleich gemäß Schritt b) fest vorgegeben und gesteuert wird.

Mittels einer Lageerfassungseinheit kann die Lage des Anbaugeräts bestimmt und bedarfsorientiert die Lage durch geeigneten Betrieb der hydraulischen Betätigungseinheit eingestellt werden.

Den erfindungsgemäßen Maßnahmen liegt insbesondere der Gedanke einer Sensoranordnung am Pflug sowie eine geeignete Regelstrategie zugrunde, welche die Lage des Pflugs so ändern bzw. anpassen kann, dass alle im Eingriff befindlichen Pflugscharen nahezu gleichmäßig dem Bodenprofil folgen und sich somit ein einheitliches und gleichmäßiges Pflugbild einstellt. Dabei wird vorgeschlagen, dass in den Pflugscharen Sensoren verbaut sind, welche entweder Rückschlüsse auf die Biegespannungen im Scharfuß oder auf Scherspannungen in der Verschraubung des Pflugschars am Gestell zulassen. Des Weiteren muss ein insbesondere doppelt wirkender Zylinder als Oberlenker für die aktive Verkippung des Pflugs zwischen Traktor und Pflug installiert sein.

Mit der vorliegenden Erfindung werden durch Sensoren die Kräfte an den einzelnen Pflugscharen gemessen und mit einer mittleren Kraft verglichen. Daraus kann die Lage des Pflugs (Höhe und Neigung ggf. auch Querneigung) bestimmt und wunschgemäß korrigiert werden.

Durch die erfindungsgemäßen Maßnahmen ergeben sich insbesondere folgende Vorteile:
- Direkte Bestimmung der für den Prozess des Pflügens relevanten Scharkraft. Die bisher gemessene Zugkraft am Unterlenker kann nur einen Durchschnittswert aller Schare abbilden. Fehler durch Verkippung sind möglich, ohne detektiert werden zu können.
- Ermöglichung der Nutzung weiterer Freiheitsgrade bei der Verstellung des Pfluges.
- Oft sind bereits hydraulische Aktoren zur Verstellung der Oberlenkerlänge und des Drehwinkels des Pfluges vorhanden. Diese können genutzt werden, um die Längs- und Querneigung des Pfluges optimal zur Bodenoberfläche auszurichten.
- Komforterhöhung.

Bevorzugt ist dabei, dass die Schritte a) bis c) während der Fahrt des Fahrzeugs durchgeführt werden. Ganz besonders bevorzugt wird das Verfahren vom Fahrer und/oder automatisch mit vorgebbaren Fahrsituationen angestoßen und intermittierend und/oder kontinuierlich durchgeführt, bis dieses vom Fahrer und/oder automatisch bei vorgebbaren Fahrsituationen beendet wird.

Bevorzugt wird mit dem Kraftmesssensor die Widerstandskraft an der mindestens einen Pflugschar ermittelt. Die ermittelte Kraft wird als Maß für die Eindringtiefe der mindestens einen Pflugschar herangezogen. Mit Vorteil wird ausgehend von der ermittelten Kraft an der mindestens einen Pflugschar zumindest eine Höhenlage zum Boden, eine Drehung um eine Längsachse oder eine Drehung um eine Höhenachse des Anbaugeräts ermittelt. Gemäß den unabhängigen Ansprüchen wird ausgehend von der ermittelten Kraft an der mindestens einen Pflugschar zumindest eine Neigung um eine Querachse des Anbaugeräts ermittelt.

Die Zugkraft bei der bekannten Nutzung der EHR kann immer nur ein Maß für die durchschnittliche Tiefe aller Pflugscharen sein. Der Kraftwert für einzelne Scharen kann aber durchaus davon abweichen, wenn der Pflug verkippt ist (zum Beispiel beim Einfahren in eine Senke). Somit kann trotz gleichbleibender Zugkraft ein ungleichmäßiges Pflugbild entstehen. Mit den vorgeschlagenen Maßnahmen wird im Gegensatz dazu ein signifikant verbessertes Pflugbild erreicht. Über eine Anordnung von Sensoren am Pflug sowie einer geeigneten Regelstrategie, die Lage des Pfluges so zu ändern bzw. anzupassen, dass alle im Eingriff befindlichen Scharen nahezu gleichmäßig dem Bodenprofil folgen, stellt sich somit ein einheitliches und gleichmäßiges Pflugbild ein.

Die hier aufgezeigte Anordnung und/oder Methode zur Lageregelung bietet insbesondere die Vorteile, dass die Lage (Position) des Anbaugeräts, insbesondere eines Pflugs, mittels der Kraftmesssensoren in verlässlicher, genauer und technisch einfacher Weise realisiert ist.

Die Erfindung und das technische Umfeld werden nachfolgend anhand von Figuren näher erläutert. Dabei sind gleiche Bauteile mit gleichen Bezugszeichen gekennzeichnet. Die Darstellungen sind schematisch und nicht zur Veranschaulichung von Größenverhältnissen vorgesehen. Es zeigen:
- Fig. 1:: Schematisch eine Seitenansicht eines Traktors mit einer hydraulischen Betätigungseinheit zur Regelung des Betriebs eines Anbaugeräts, umfassend einen Kraftmesssensor für eine Lageerfassungseinheit;
- Fig. 2:: Seitenansicht gemäß Figur 1, bei der die Kraftmesssensoren der Lageerfassungseinheit am Anbaugerät positioniert sind;
- Fig. 2a:: ein Blockschaltbild, wobei ein Meßwertwandler mit einem Kraftmesssensor und der Auswerteeinheit elektrisch in Verbindung steht;
- Fig. 3:: schematische Darstellung eines Traktors mit angebautem Pflug beim Pflügen während des Einfahrens in eine Bodensenke mit einer bekannten Vorrichtung;
- Fig. 3a bis 3d:: Darstellung der Widerstands- bzw. Pflugkräfte gegenüber der Zeit an den in den Boden eingedrungenen Pflugscharen gemäß Figur 3;
- Fig. 4:: schematische Darstellung des Traktors und des Pflugs während des Einfahrens in eine Bodensenke mit der erfindungsgemäßen Vorrichtung sowie eine bevorzugt einzustellende Position der Pflugscharen;
- Fig. 4a bis 4d:: Darstellung der Widerstands- bzw. Pflugkräfte gegenüber der Zeit an den in den Boden eingedrungenen Pflugscharen gemäß Figur 4;
- Fig. 5a:: schematische Darstellung der Anordnung eines Kraftmesssensors an der Halterung für die Befestigung zweier freiliegender Pflugschare;
- Fig. 5b:: schematische Darstellung der Anordnung eines Kraftmesssensors gemäß Figur 5a, wobei jedoch die untere Pflugschar in den Boden eingedrungen und die obere Pflugschar freiliegend ist;
- Fig. 6:: schematische Darstellung der Anordnung zweier Pflugschare gemäß Figur 5b, wobei jedoch ein Kraftmesssensor am Steg der unteren eingedrungenen Pflugschar und ein Kraftmesssensor am Steg der oberen freiliegend Pflugschar angeordnet sind;
- Fig. 7:: die Anordnung eines Drucksensors im Unterlenkerzylinder des Hubwerks.

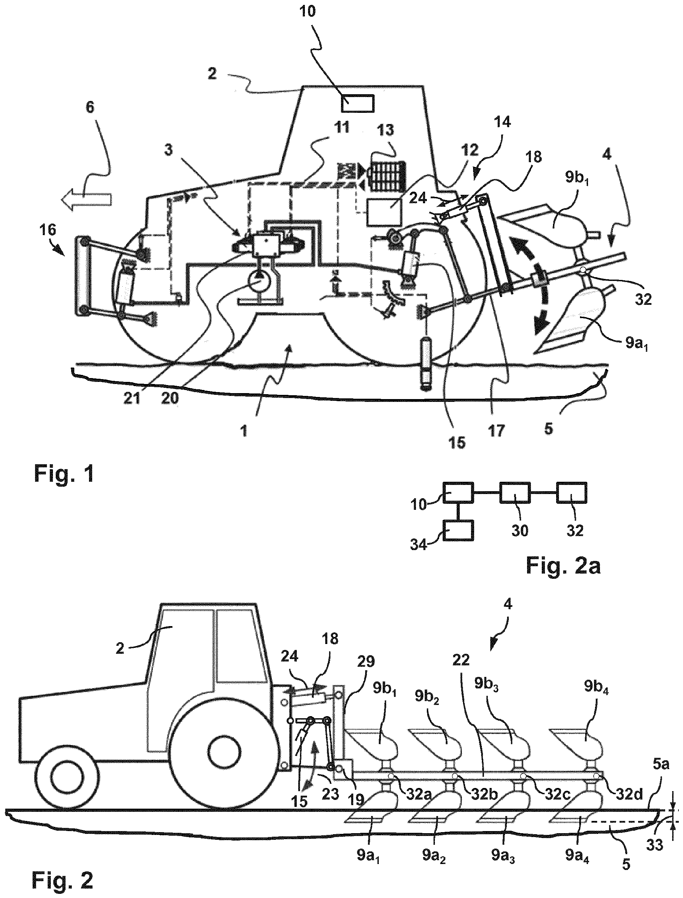

Figur 1 zeigt die prinzipielle Darstellung der hier angegebenen Vorrichtung 1 an einem Fahrzeug 2, insbesondere nach Art eines Traktors bei der Bodenbearbeitung mit einem Schleppgerät, insbesondere mit einem Pflug. Dabei zieht das Fahrzeug 2 bei einer Fahrt in Fahrtrichtung 6 das Anbaugerät 4 hinter sich her und durch die Oberschicht des Bodens 5. Der allgemeine Fahrbetrieb des Fahrzeugs 2 kann über eine (ggf. separate) Fahrzeugsteuerung 12 beeinflusst werden. Die Lage bzw. Position des Anbaugeräts 4 kann mit einer hydraulischen Betätigungseinheit 3, aufweisend ein Steuergerät 13, zur Ansteuerung der hydraulischen Betätigungseinheit 3 und ein heckseitiges Hubwerk 14 mit einem Unterlenkerzylinder 15 eingestellt werden. Die hydraulische Betätigungseinheit 3 kann insbesondere wie folgt aufgebaut sein: Die Pumpe 20 fördert einen Ölstrom zum Regelventil 21, welches den Unterlenkerzylinder 15 steuert. Dieser wirkt auf den Unterlenker 17, wodurch das Anbaugerät 4 gehoben, gehalten oder abgesenkt werden kann. Mit 18 ist der Oberlenkerzylinder des Hubwerks 14 bezeichnet. An dem Träger 22 (siehe Figur 2) ist etwa in einem rechten Winkel ein Hebelarm 29 starr befestigt, an dem das eine Ende des Oberlenkerzylinders 18 angreift, dessen anderes Ende am Traktor gelagert ist. Mit 24 ist die Bewegungsrichtung des Kolbens im Oberlenkerzylinder 18 und mit 32 ein Kraftmesssensor bezeichnet.

Figur 2 zeigt eine schematische Darstellung des Fahrzeugs 2 (Ackerschlepper) während des Pflügens mit einem EHR-System. Hierbei ist der Pflug über den Unterlenker 17 und den hydraulisch verstellbaren Oberlenkerzylinder 18 mit dem Traktor verbunden. Da der Unterlenker 17 durch den Unterlenkerzylinder 15 in seiner Höhe verstellt werden kann, ist es möglich, den Pflug in dieser Konstellation sowohl in seiner Höhe als auch in seiner Neigung um die Querachse 19 zu verstellen.

Um die Lage des Pflugs im Raum und somit seine Tiefe bzw. Höhe (Höhenlage 25) sowie seine Neigung (Neigungslage 26) ermitteln zu können, sind gemäß Figur 2 an einem Träger 22 des Pflugs Kraftmesssensoren 32a bis 32d angebracht, zum Beispiel durch Kleben.

In Figur 2 sind mit 9a₁ bis 9a₄ unterhalb und 9b₁ bis 9b₄ oberhalb des Trägers 22 angeordnete Pflugschare bezeichnet. Die unterhalb angeordneten Pflugschare 9a₁ bis 9a₄ sind teilweise in den Boden 5 eingedrungen. Mit 5a ist die Bodenoberfläche bezeichnet. Mit 33 ist die Eindringtiefe des in den Boden 5 eingedrungenen Bereichs der unterhalb des Trägers 22 befindlichen Pflugschare 9a₁ bis 9a₄ bezeichnet. Mit 23 ist die Bewegungsrichtung des Unterlenkers 17 in Höhenrichtung bezeichnet.

Nach Figur 2a steht ein Meßwertwandler 30 mit einem Kraftmesssensor 32 und der Auswerteeinheit 10 (siehe Figur 1) elektrisch in Verbindung. Der Meßwertwandler 30 wandelt die mechanischen Kräfte des Kraftmesssensors 32 in elektrische Impulse um. An die Auswerteeinheit 10 ist ein Vergleichselement 34 angeschlossen, das einen Vergleich der ermittelten Kraftmesswerte mit einer Referenzkraft durchführt. Das Vergleichselement 34 kann in die Auswerteeinheit 10 integriert sein.

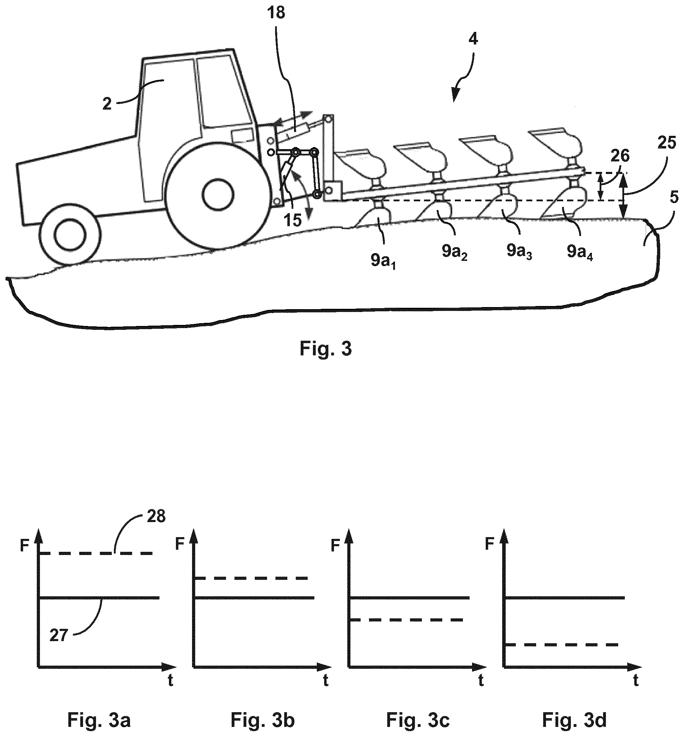

Figur 3 zeigt die schematische Darstellung eines Traktors beim Pflügen mit einem elektrohydraulischen Hubwerksregelsystem (EHR-System) in einer bekannten Ausführungsform. Der Traktor (Fahrzeug 2) fährt samt Pflug (Anbaugerät 4) in eine Senke des Bodens 5 ein. Deutlich zu erkennen ist, dass die vorderen Pflugschare 9a₁ und 9a₂ tiefer in den Boden einsinken als die hinteren Pflugschare 9a₃ und 9a₄. Den in Figur 3a bis 3b schematischen Darstellungen der Widerstands- bzw. Pflugkräfte F gegenüber der Zeit t ist ein Ausschnitt des zeitlichen Verlaufs eben dieser zu entnehmen. Hierbei dargestellt sind jeweils die wirkende Widerstandskraft 28 sowie die mittlere Widerstandskraft 27 aller Pflugschare. Die Widerstands- bzw. Pflugkräfte für die vorderen Schare 9a₁, 9a₂ sind dabei signifikant größer als die Widerstands- bzw. Pflugkräfte der hinteren Schare 9a₃, 9a₄.

Für den Fall des aus der Senke ausfahrenden Ackerschleppers verhält sich die Kraftentstehung genau entgegen. Da in diesem Fall die vorderen Pflugschare 9a₁ und 9a₂ mehr aus dem Boden 5 ragen als die hinteren Pflugschare 9a₃ und 9a₄, liegen die Kraftniveaus der vorderen Pflugschare 9a₁ und 9a₂ deutlich unter den Kraftniveaus der hinteren Pflugschare 9a₃ und 9a₄.

Nun kann die EHR zwar bedingt auf sich ändernde Bodentopologien bzw. Bodenoberflächen reagieren, indem durch das verstärkte Eintauchen der hinteren bzw. der vorderen Schare und in der Regel der daraus resultierenden Erhöhung der Gesamtwiderstands- bzw. - pflugkraft (gemessen an den Kraftsensoren in den Gelenkpunkten des Unterlenkers 17) der eingestellte Sollwert der Regelung überschritten und der Pflug infolge ausgehoben wird. Dies erfolgt jedoch in relativer Änderung zum Traktor und nicht absolut zum Bodenprofil. Ein gleichmäßiges Pflugbild, bei dem sich die Neigung des Pflugs annähernd nach der Topologie der Ebene des zu bearbeitenden Bodens 5 einstellt, kann mit dieser bekannten Anordnung nicht erreicht werden. Zudem werden hierbei zwei kostenintensive Kraftmessbolzen benötigt, welche einen erheblichen Anteil der Gesamtkosten eines EHR-Systems ausmachen.

Diese Problematik tritt vor allem bei kleineren Ackerschleppern auf, bei denen der traktorseitige Abstand der Gelenkpunkte zwischen Ober- und Unterlenkeranbindung teils deutlich größer oder kleiner ist als der anbaugeräteseitige Abstand der Gelenkpunkte zwischen Oberlenker- und Unterlenkeranbindung. Dadurch ergibt sich eine ungünstige Form des entsprechenden Vier-Gelenk-Mechanismus, welches kein vorteilhaftes Parallelogramm abbildet, und sich somit für die höhenabhängige Neigung des Pflugs bzw. Anbaugeräts verantwortlich zeigt. Bei extremer Verkippung kann letzten Endes kein zufriedenstellendes Pflugbild garantiert werden, da die Pflugscharen ungleichmäßig in den Boden 5 eindringen.

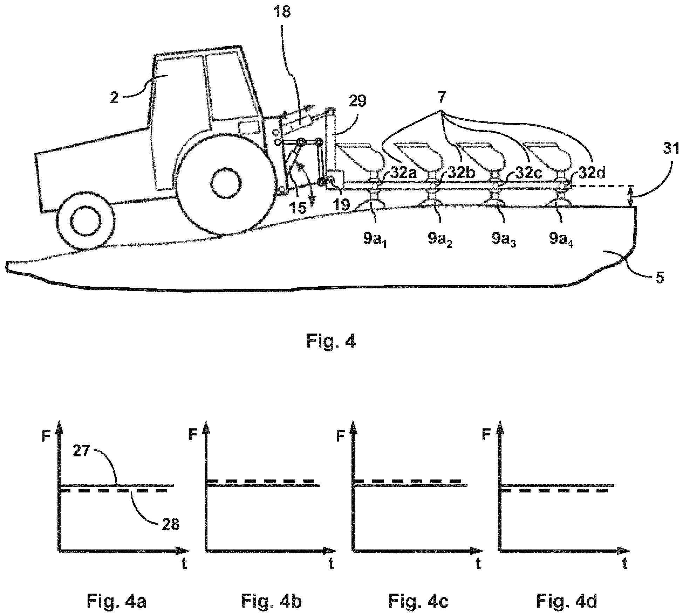

Figur 4 zeigt die Darstellung des Traktors (Fahrzeug 2) und des angebauten Pflugs (Anbaugerät 4) während des Einfahrens in eine Bodensenke mit der erfindungsgemäßen Vorrichtung und einem EHR-System und unter Anwendung des erfindungsgemäßen Verfahrens sowie eine bevorzugte einzustellende Position der Pflugscharen 9a₁ bis 9a₄. Hierbei ist der Pflug über den Unterlenker 17 und den hydraulisch verstellbaren Oberlenkerzylinder 18 mit dem Traktor verbunden. Da der Unterlenker 17 durch den Unterlenkerzylinder 15 in seiner Höhe verstellt werden kann, ist es möglich, den Pflug in dieser Konstellation sowohl in seiner Höhe als auch in seiner Neigung um die Querachse 19 zu verstellen.

Mit den Kraftmesssensoren 32a bis 32d kann auf die Widerstandskraft einer jeden Pflugschars geschlossen werden. Anwendbar sind hierbei zum Beispiel auf dem Prinzip von Dehnmessstreifen basierende Sensoren, mit denen die Biegespannungen im Steg/Fuß der Pflugschar gemessen werden können. Weiterhin anwendbar sind Sensoren in den Anschraubpunkten, welche die Scherkräfte in den Verschraubungen zwischen Pflugschar und Pfluggestell messen.

Beiden Arten der Signalermittlung gemeinsam ist, dass die gemessenen Werte ein Äquivalent der tatsächlich auf die Pflugschar wirkenden Widerstands- bzw. Pflugkräfte sind. In den Fig. 4a bis 4d werden beispielhaft die wirkenden Scharwiderstände dargestellt, wobei Kennlinie 28 die momentan wirkende Scharkraft am jeweiligen Pflugschar (Fig. 4a für 9a₁, Fig. 4b für 9a₂, Fig. 4c für 9a₃, Fig. 4d für 9a₄) angibt. Kennlinie stellt in allen Diagrammen der Figuren 4a bis 4d die mittlere Scharkraft aller im Eingriff befindlichen Pflugschare 27 (9a₁ bis 9a₄) dar. Für die Regelung wird der folgende Ansatz vorgeschlagen:

Die mittlere Pflugtiefe wird über die mittlere Scharkraft eingestellt. Der Traktorfahrer bzw. Bediener gibt einen Sollwert an einem Bediengerät vor und hauptsächlich über die Einstellung des Unterlenkerzylinders 15 kann durch Heben bzw. Senken des Pfluges der mittlere Wert aller Pflugschare auf diesen Wert eingeregelt werden. Zusätzlich wird durch den Oberlenkerzylinder 18 die Neigung des Pfluges derart verstellt, dass die Einzelscharkräfte dem mittleren einzustellenden Kraftäquivalentwert nahezu angenähert werden. Mit diesem Regelansatz wird ein partielles Ausheben- bzw. Einsinken von Pflugscharen, wie z.B. in Fig. 3 gezeigt, vermieden, da an allen Scharen ein in etwa gleichgroßer Kraftäquivalentwert eingestellt wird. Der Pflug folgt somit dem Bodenprofil, wodurch sich das Pflugbild entsprechend verbessert.

Hierbei kann mit den Kraftmesssensoren 32a bis 32d die individuelle Eindringtiefe 33 (sh. Fig. 2) einer jeden Pflugschar 9a₁ bis 9a₄ bestimmt werden. Über die Verstellung des Unterlenkerzylinders 15 und des Oberlenkerzylinders 18 kann die Lage des Pflugs dahingehend verändert werden, dass sich eine gleichmäßige individuelle Eindringtiefe 33 aller Pflugscharen 9a₁ bis 9a₄ in den Boden 5 bzw. eine vorgegebene Referenz-Höhenlage 31 des Anbaugeräts 4 oberhalb des Bodens 5 einstellt.

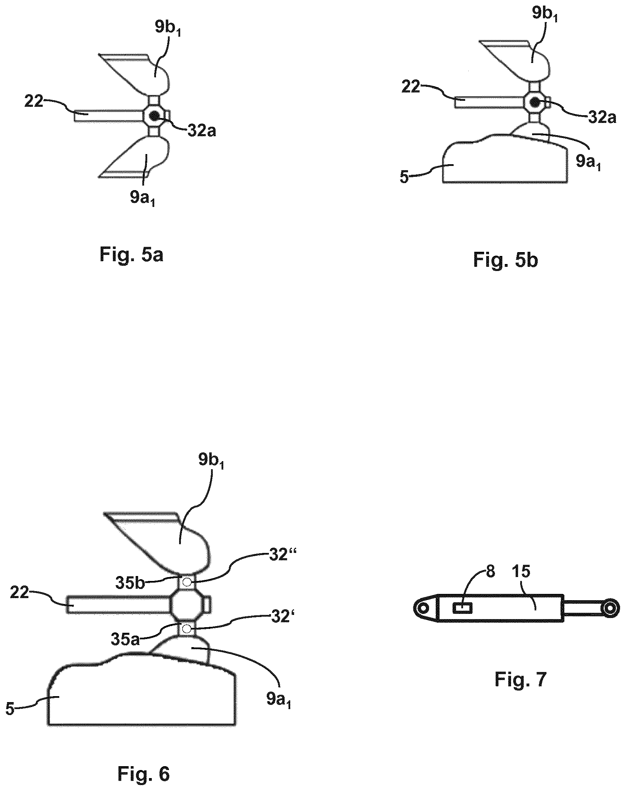

Die Figuren 5a und 5b zeigen eine schematische Darstellung zweier Pflugschare 9a₁, 9b₁ eines Pflugs (einmal freiliegend und einmal bei der Bodenbearbeitung) mit der Anordnung eines Kraftmesssensors 32a am Anschraubpunkt am Träger 22 für die Befestigung der Pflugschare 9a₁ und 9b₁.

Der Kraftmesssensor 32a wird an der Halterung angebracht, an welcher beide Pflugschare 9a₁, 9b₁ (oben und unten) befestigt sind. Figur 5a zeigt einen Pflug in ausgehobenem bzw. in einem freien Zustand.

Die Differenz zwischen der aktuell ermittelten Kraft bei eingefahrenem Pflug und der abgespeicherten Kraft bei ausgefahrenem Pflug kann als Maß für die Eindringtiefe 33 der Pflugscharen 9a₁ bis 9a₄ in den Boden 5 interpretiert werden.

Alternativ wird vorgeschlagen, dass gemäß Figur 6 jeweils ein Kraftmesssensor 32' bzw. 32" am Steg 35a der Pflugschar 9a₁ bzw. am Steg 35b der Pflugschar 9b₁ angeordnet ist.

Für die jeweils ähnlichen Detektionsverfahren gilt, dass sich mit Änderung der Bodenbeschaffenheit (zum Beispiel inhomogene Böden, feuchte Böden) ggf. auch eine veränderliche mechanische Widerstandskraft F und dementsprechend auch eine andere (höhere) Einspannung des Pflugs ergeben kann. Eine erhöhte Einspannung hat ebenso eine Erhöhung der Kräfte zur Folge. Somit kann indirekt ggf. auch auf sich ändernde Widerstandskräfte F geschlossen werden. Es könnte somit ebenso ein Ausheben des Pflugs während der Regelung bei höher werdenden Pflugkräften erreicht werden. Dies kann ein Abwürgen des Fahrzeugs 2 oder ein Festfahren verhindern helfen.

Für eine kostengünstige Alternative wird vorgeschlagen, nur an der ersten Pflugschar 9a₁ sowie an der letzten Pflugschar 9a₄ Kraftmesssensoren 32a bis 32d zu verbauen.

Nach Figur 7 ist ein Drucksensor 8 im Unterlenkerzylinder 15 angeordnet.

Die Erfindung wurde am Beispiel eines Pflugs näher erläutert. Generell lässt sich die vorgestellte Sensoranordnung und grundlegende Regelstrategie auch auf andere Anbaugeräte zur Bodenbearbeitung, wie zum Beispiel einen Grubber, übertragen.

### Bezugszeichen

- 1: Vorrichtung
- 2: Fahrzeug
- 3: Hydraulische Betätigungseinheit
- 4: Anbaugerät
- 5: Boden
- 5a: Bodenoberfläche
- 6: Fahrtrichtung
- 7: Lageerfassungseinheit
- 8: Drucksensor
- 9a₁ bis 9a₄: Pflugscharen unterhalb des Trägers
- 9b₁ bis 9b₄: Pflugscharen oberhalb des Trägers
- 10: Auswerteeinheit
- 11: Datenleitende Verbindung
- 12: Fahrzeugsteuerung
- 13: Steuergerät
- 14: Hubwerk
- 15: Unterlenkerzylinder
- 16: Fronthubwerk
- 17: Unterlenker
- 18: Oberlenkerzylinder
- 19: Querachse
- 20: Pumpe
- 21: Regelventil
- 22: Träger
- 23: Bewegungsrichtung
- 24: Bewegungsrichtung
- 25: Höhenlage
- 26: Neigungslage
- 27: Mittlere Widerstandskraft
- 28: Widerstandskraft
- 29: Hebelarm
- 30: Meßwertwandler
- 31: Referenzhöhenlage
- 32: Kraftmesssensor
- 32a bis 32d; 32', 32": Kraftmesssensoren
- 33: Eindringtiefe
- 34: Vergleichselement
- 35a, 35b: Steg

## Patentansprüche

1. Fahrzeug (2) mit einem Anbaugerät (4) und einer hydraulischen Betätigungseinheit (3) zur Regelung des Betriebs eines Anbaugeräts (4) an dem Fahrzeug (2), wobei das Anbaugerät (4) mindestens eine Pflugschar (9a₁ bis 9a₄; 9b₁ bis 9b₄) aufweist, und mit einer Vorrichtung (1) umfassend zumindest eine Lageerfassungseinheit (7) mit mindestens einem Lageerfassungssensor, eine Auswerteeinheit (10) und eine datenleitende Verbindung (11) hin zu einem der hydraulischen Betätigungseinheit (3) zugeordneten Steuergerät (13), wobei der mindestens einen Pflugschar (9a₁ bis 9a₄; 9b₁ bis 9b₄) mindestens ein Kraftmesssensor (32; 32a bis 32d; 32', 32") so zugeordnet ist, dass mindestens eine angreifende Kraft an der mindestens einen Pflugschar (9a₁ bis 9a₄; 9b₁ bis 9b₄) direkt ermittelbar ist, wobei die Auswerteeinheit dazu eingerichtet ist die folgenden Schritte durchzuführen:
a) Ermitteln mindestens einer an der mindestens einen Pflugschar angreifenden Kraft mittels des mindestens einen Kraftmesssensors (32; 32a bis 32d; 32', 32");
b) Vergleich der ermittelten Kraft mit einer vorgegebenen mittleren Kraft aller Pflugscharen (9a₁ bis 9a₄; 9b₁ bis 9b₄)
c) Aktivieren der hydraulischen Betätigungseinheit, wenn die ermittelte Kraft von der mittleren Kraft aller Pflugscharen abweicht,
wobei die ermittelte Kraft als Maß für die Eindringtiefe (33) der mindestens einen Pflugschar (9a₁ bis 9a₄; 9b₁ bis 9b₄) herangezogen wird,
wobei ausgehend von der ermittelten Kraft an der mindestens einen Pflugschar (9a₁ bis 9a₄; 9b₁ bis 9b₄) zumindest eine Neigung um eine Querachse (19) des Anbaugerätes (4) ermittelt wird.

2. Vorrichtung (1) nach Anspruch 1, **dadurch gekennzeichnet, dass** jeweils mindestens ein Kraftmesssensor (32; 32a bis 32d; 32', 32") zumindest an der ersten Pflugschar (9a₁, 9b₁) und an der letzten Pflugschar (9a₄, 9b₄) verbaut ist.

3. Vorrichtung (1) nach Anspruch 1 oder 2, **dadurch gekennzeichnet, dass** der mindestens eine Kraftmesssensor (32; 32a bis 32d; 32', 32") ein Biegespannungsmesssensor ist.

4. Vorrichtung (1) nach Anspruch 1 oder 2, **dadurch gekennzeichnet, dass** der mindestens eine Kraftmesssensor (32; 32a bis 32d; 32', 32") ein Scherkraftmesssensor ist.

5. Vorrichtung (1) nach einem der Ansprüche 1 bis 4, **dadurch gekennzeichnet, dass** der Biegespannungsmesssensor am Steg (35a, 35b) oder Fuß der mindestens einen Pflugschar (9a₁ bis 9a₄; 9b₁ bis 9b₄) angeordnet ist.

6. Vorrichtung (1) nach einem der Ansprüche 1 bis 5, **dadurch gekennzeichnet, dass** der Scherkraftmesssensor in einem Anschraubpunkt zwischen Pflugschar (9a₁ bis 9a₄; 9b₁ bis 9b₄) und Träger (22) angeordnet ist.

7. Vorrichtung (1) nach einem der Ansprüche 1 bis 6, **dadurch gekennzeichnet, dass** die hydraulische Betätigungseinheit (3) zur Ansteuerung eines Oberlenkerzylinders (18) und eines Hubwerkszylinders (Unterlenkerzylinder 15)verwendbar ist.

8. Vorrichtung (1) nach einem der Ansprüche 1 bis 7, **dadurch gekennzeichnet, dass** zumindest am Anschluss des Unterlenkerzylinders (15) oder im Unterlenkerzylinder (15) ein Drucksensor (8) angeordnet ist.

9. Vorrichtung (1) nach einem der Ansprüche 1 bis 8, **dadurch gekennzeichnet, dass** der Kraftmesssensor (32, 32a bis 32d; 32', 32") mit der Auswerteeinheit in Verbindung steht, wobei das Vergleichselement (34) für einen Vergleich der ermittelten Kraft an einer in den Boden (5) eingedrungenen Pflugschar (9a₁ bis 9a₄) mit einer mittleren Kraft aller Pflugscharen (9a₁ bis 9a₄) vorhanden ist.

10. Verfahren zum Betrieb eines Fahrzeugs (2) mit einer hydraulischen Betätigungseinheit (3) zur Regelung des Betriebs eines Anbaugeräts (4) an dem Fahrzeug (2), wobei das Verfahren zumindest die folgenden Schritte umfasst:
a) Ermitteln mindestens einer an der mindestens einen Pflugschar (9a₁ bis 9a₄; 9b₁ bis 9b₄) angreifenden Kraft mittels mindestens eines Kraftmesssensors (32; 32a bis 32d; 32', 32");
b) Vergleich der ermittelten Kraft mit einer vorgegebenen mittleren Kraft aller Pflugscharen (9a₁ bis 9a₄; 9b₁ bis 9b₄);
c) Aktivieren der hydraulischen Betätigungseinheit (3), wenn die ermittelte Kraft von der mittleren Kraft aller Pflugschare (9a₁ bis 9a₄; 9b₁ bis 9b₄) abweicht.
wobei die ermittelte Kraft als Maß für die Eindringtiefe (33) der mindestens einen Pflugschar (9a₁ bis 9a₄; 9b₁ bis 9b₄) herangezogen wird,
wobei ausgehend von der ermittelten Kraft an der mindestens einen Pflugschar (9a₁ bis 9a₄; 9b₁ bis 9b₄) zumindest eine Neigung um eine Querachse (19) des Anbaugerätes (4) ermittelt wird.

11. Verfahren nach Anspruch 10, bei dem alle Schritte a) bis c) während der Fahrt des Fahrzeugs (2) durchgeführt werden.

12. Verfahren nach einem der Ansprüche 10 oder 11, wobei ausgehend von der ermittelten Kraft an der mindestens einen Pflugschar (9a₁ bis 9a₄; 9b₁ bis 9b₄) zumindest eine Höhenlage (25) zum Boden (5), eine Drehung um eine Längsachse oder eine Drehung um eine Höhenachse des Anbaugerätes (4) ermittelt wird.

## Claims

1. Vehicle (2) having an attachment (4) and a hydraulic actuating unit (3) for regulating the operation of an attachment (4) on the vehicle (2), wherein the attachment (4) has at least one ploughshare (9a₁ to 9a₄; 9b₁ to 9b₄), and having an apparatus (1) comprising at least one position detection unit (7) with at least one position detection sensor, an evaluation unit (10) and a data-carrying connection (11) to a control unit (13) assigned to the hydraulic actuating unit (3), wherein the at least one ploughshare (9a₁ to 9a₄; 9b₁ to 9b₄) is assigned at least one force measuring sensor (32; 32a to 32d; 32', 32") such that at least one force acting on the at least one ploughshare (9a₁ to 9a₄; 9b₁ to 9b₄) is directly able to be determined, wherein the evaluation unit is set up to carry out the following steps:
a) determining at least one force acting on the at least one ploughshare by means of the at least one force measuring sensor (32; 32a to 32d; 32', 32");
b) comparing the determined force with a predefined average force of all the ploughshares (9a₁ to 9a₄; 9b₁ to 9b₄),
c) activating the hydraulic actuating unit when the determined force differs from the average force of all the ploughshares,
wherein the determined force is used as a measure for the penetration depth (33) of the at least one ploughshare (9a₁ to 9a₄; 9b₁ to 9b₄),
wherein, proceeding from the determined force on the at least one ploughshare (9a₁ to 9a₄; 9b₁ to 9b₄), at least one inclination about a transverse axis (19) of the attachment (4) is determined.

2. Apparatus (1) according to Claim 1, **characterized in that** in each case at least one force measuring sensor (32; 32a to 32d; 32', 32") is installed at least on the first ploughshare (9a₁, 9b₁) and on the last ploughshare (9a₄, 9b₄) .

3. Apparatus (1) according to Claim 1 or 2, **characterized in that** the at least one force measuring sensor (32; 32a to 32d; 32', 32") is a bending stress measuring sensor.

4. Apparatus (1) according to Claim 1 or 2, **characterized in that** the at least one force measuring sensor (32; 32a to 32d; 32', 32") is a shear force measuring sensor.

5. Apparatus (1) according to one of Claims 1 to 4, **characterized in that** the bending stress measuring sensor is arranged on the bar (35a, 35b) or foot of the at least one ploughshare (9a₁ to 9a₄; 9b₁ to 9b₄) .

6. Apparatus (1) according to one of Claims 1 to 5, **characterized in that** the shear force measuring sensor is arranged in a screw-on point between the ploughshare (9a₁ to 9a₄; 9b₁ to 9b₄) and carrier (22).

7. Apparatus (1) according to one of Claims 1 to 6, **characterized in that** the hydraulic actuating unit (3) is usable for actuating a top-link cylinder (18) and a lifting-unit cylinder (lower-link cylinder 15) .

8. Apparatus (1) according to one of Claims 1 to 7, **characterized in that** a pressure sensor (8) is arranged at least at the connection of the lower-link cylinder (15) or in the lower-link cylinder (15) .

9. Apparatus (1) according to one of Claims 1 to 8, **characterized in that** the force measuring sensor (32; 32a to 32d; 32', 32") is connected to the evaluation unit, wherein the comparing element (34) for comparing the determined force on a ploughshare (9a₁ to 9a₄) that has penetrated into the ground (5) with an average force of all the ploughshares (9a₁ to 9a₄) is present.

10. Method for operating a vehicle (2) having a hydraulic actuating unit (3) for regulating the operation of an attachment (4) on the vehicle (2), wherein the method comprises at least the following steps of:
a) determining at least one force acting on the at least one ploughshare (9a₁ to 9a₄; 9b₁ to 9b₄) by means of at least one force measuring sensor (32; 32a to 32d; 32', 32");
b) comparing the determined force with a predefined average force of all the ploughshares (9a₁ to 9a₄; 9b₁ to 9b₄) ;
c) activating the hydraulic actuating unit (3) when the determined force differs from the average force of all the ploughshares (9a₁ to 9a₄; 9b₁ to 9b₄),
wherein the determined force is used as a measure for the penetration depth (33) of the at least one ploughshare (9a₁ to 9a₄; 9b₁ to 9b₄),
wherein, proceeding from the determined force on the at least one ploughshare (9a₁ to 9a₄; 9b₁ to 9b₄), at least one inclination about a transverse axis (19) of the attachment (4) is determined.

11. Method according to Claim 10, wherein all of steps a) to c) are carried out while the vehicle (2) is travelling.

12. Method according to either of Claims 10 and 11, wherein, proceeding from the determined force on the at least one ploughshare (9a₁ to 9a₄; 9b₁ to 9b₄), at least one height (25) relative to the ground (5), a rotation about a longitudinal axis or a rotation about a vertical axis of the attachment (4) is determined.

## Revendications

1. Véhicule (2) comprenant un outil porté (4) et une unité d'actionnement hydraulique (3) pour la régulation du fonctionnement d'un outil porté (4) sur le véhicule (2), dans lequel l'outil porté (4) comprend au moins un soc (9a₁ à 9a₄ ; 9b₁ à 9b₄), et comprenant un dispositif (1) comportant au moins une unité de détermination de position (7) dotée d'au moins un capteur de détection de position, une unité d'évaluation (10) et une liaison (11) de transmission de données vers un appareil de commande (13) associé à l'unité d'actionnement hydraulique (3), dans lequel au moins un capteur de mesure de force (32 ; 32a à 32d ; 32', 32'') est associé à l'au moins un soc (9a₁ à 9a₄ ; 9b₁ à 9b₄) de telle sorte qu'au moins une force agissant sur l'au moins un soc (9a₁ à 9a₄ ; 9b₁ à 9b₄) puisse être déterminée directement, dans lequel l'unité d'évaluation est conçue pour effectuer les étapes suivantes :
a) détermination d'au moins une force agissant sur l'au moins un soc au moyen de l'au moins un capteur de mesure de force (32 ; 32a à 32d ; 32', 32") ;
b) comparaison de la force déterminée avec une force moyenne prédéfinie de tous les socs (9a₁ à 9a₄ ; 9b₁ à 9b₄),
c) activation de l'unité d'actionnement hydraulique lorsque la force déterminée diffère de la force moyenne de tous les socs,
dans lequel la force déterminée est utilisée comme mesure pour la profondeur de pénétration (33) de l'au moins un soc (9a₁ à 9a₄ ; 9b₁ à 9b₄),
dans lequel, à partir de la force déterminée sur l'au moins un soc (9a₁ à 9a₄ ; 9b₁ à 9b₄), au moins une inclinaison autour d'un axe transversal (19) de l'outil porté (4) est déterminée.

2. Dispositif (1) selon la revendication 1, **caractérisé en ce que** respectivement au moins un capteur de mesure de force (32 ; 32a à 32d ; 32', 32'') est installé au moins sur le premier soc (9a₁, 9b₁) et sur le dernier soc (9a₄, 9b₄) .

3. Dispositif (1) selon la revendication 1 ou 2, **caractérisé en ce que** l'au moins un capteur de mesure de force (32 ; 32a à 32d ; 32', 32'') est un capteur de mesure de contrainte de flexion.

4. Dispositif (1) selon la revendication 1 ou 2, **caractérisé en ce que** l'au moins un capteur de mesure de force (32 ; 32a à 32d ; 32', 32'') est un capteur de mesure de force de cisaillement.

5. Dispositif (1) selon l'une des revendications 1 à 4, **caractérisé en ce que** le capteur de mesure de contrainte de flexion est disposé au niveau de l'entretoise (35a, 35b) ou du pied de l'au moins un soc (9a₁ à 9a₄ ; 9b₁ à 9b₄) .

6. Dispositif (1) selon l'une des revendications 1 à 5, **caractérisé en ce que** le capteur de mesure de force de cisaillement est disposé en un point de vissage entre soc (9a₁ à 9a₄ ; 9b₁ à 9b₄) et support (22) .

7. Dispositif (1) selon l'une des revendications 1 à 6, **caractérisé en ce que** l'unité d'actionnement hydraulique (3) peut être utilisée pour la commande d'un cylindre de bras supérieur (18) et d'un cylindre de dispositif de levage (cylindre de bras inférieur 15).

8. Dispositif (1) selon l'une des revendications 1 à 7, **caractérisé en ce qu'**un capteur de pression (8) est disposé au moins au niveau du raccordement du cylindre de bras inférieur (15) ou dans le cylindre de bras inférieur (15).

9. Dispositif (1) selon l'une des revendications 1 à 8, **caractérisé en ce que** le capteur de mesure de force (32 ; 32a à 32d ; 32', 32'') est en liaison avec l'unité d'évaluation, l'élément de comparaison (34) étant prévu pour une comparaison de la force déterminée sur un soc (9a₁ à 9a₄) introduit dans le sol (5) avec une force moyenne de tous les socs (9a₁ à 9a₄).

10. Procédé de fonctionnement d'un véhicule (2) comprenant une unité d'actionnement hydraulique (3) pour la régulation du fonctionnement d'un outil porté (4) sur le véhicule (2), le procédé comportant au moins les étapes suivantes :
a) détermination d'au moins une force agissant sur l'au moins un soc (9a₁ à 9a₄ ; 9b₁ à 9b₄) au moyen d'au moins un capteur de mesure de force (32 ; 32a à 32d ; 32', 32") ;
b) comparaison de la force déterminée avec une force moyenne prédéfinie de tous les socs (9a₁ à 9a₄ ; 9b₁ à 9b₄) ;
c) activation de l'unité d'actionnement hydraulique (3) lorsque la force déterminée diffère de la force moyenne de tous les socs (9a₁ à 9a₄ ; 9b₁ à 9b₄),
dans lequel la force déterminée est utilisée comme mesure pour la profondeur de pénétration (33) de l'au moins un soc (9a₁ à 9a₄ ; 9b₁ à 9b₄),
dans lequel, à partir de la force déterminée sur l'au moins un soc (9a₁ à 9a₄ ; 9b₁ à 9b₄), au moins une inclinaison autour d'un axe transversal (19) de l'outil porté (4) est déterminée.

11. Procédé selon la revendication 10, dans lequel toutes les étapes a) à c) sont effectuées pendant la conduite du véhicule (2).

12. Procédé selon l'une des revendications 10 ou 11, dans lequel, à partir de la force déterminée sur l'au moins un soc (9a₁ à 9a₄ ; 9b₁ à 9b₄), au moins une position en hauteur (25) par rapport au sol (5), une rotation autour d'un axe longitudinal ou une rotation autour d'un axe vertical de l'outil porté (4) sont déterminées.
